# EUROPEAN PATENT SPECIFICATION

(11) **EP 3 636 970 B1**
(45) Date of publication and mention of the grant of the patent: **05.01.2022**
(21) Application number: 19202120.2
(22) Date of filing: 09.10.2019
(51) Int. Cl.: F16K 5/06, F16K 5/12

(54) **INSERT PIECE, FLOW CONTROL BALL, BALL VALVE AND METHOD**
EINSATZTEIL, DURCHFLUSSSTEUERKUGEL, KUGELVENTIL UND VERFAHREN
PIÈCE D'INSERT, BILLE DE COMMANDE D'ÉCOULEMENT, SOUPAPE À BILLE ET PROCÉDÉ

(30) Priority: 09.10.2018 FI 20185842
(43) Date of publication of application: 15.04.2020
(73) Proprietor: Vexve Oy, 38200 Sastamala (FI)
(72) Inventor: Rantala, Jari, 38210 Sastamala (FI); Lähdeniemi, Juuso, 38460 Sastamala (FI); Teittinen, Tuomas, 38200 Sastamala (FI); Kulma, Pertti, 38210 Sastamala (FI)
(74) Representative: Papula Oy

(56) References cited:
- WO-A1-2012/118452
- FR-A- 1 462 437
- US-A- 4 371 146
- US-A- 4 568 059
- US-A- 5 937 890

## Description

### Background of the invention

The invention relates to an insert piece intended to be used in connection with ball valves.

The invention further relates to a flow control ball of a ball valve, to a ball valve and to a method for modifying properties of ball valves.

The field of the invention is defined more specifically in the preambles of the independent claims.

Ball valves are capable of controlling a flow through a conduit by using a sphere with a port or hole typically centered in the sphere. The valve is opened by rotating the sphere so as to position the port or hole in line with both ends of the valve. A flow may thus move from a first end of the valve, traverse the port or hole, and continue through the second end of the valve. Likewise, the valve is closed by rotating the sphere so as to position the port or hole perpendicular to the ends of the valve. Documents US-5937890-A, US-4568059-A and WO-2012/118452-A1 disclose some ball valves. FR1462437 discloses an insert piece according to the preamble of claim 1. The known ball valves have shown to contain some disadvantages.

### Brief description of the invention

An object of the invention is to provide novel and improved insert piece, valve ball, ball valve and method of modifying properties of a ball valve.

The insert piece according to the invention is characterized by the characterizing features of a first independent apparatus claim.

The method according to the invention is characterized by the charactering features and steps of an independent method claim.

An idea of the disclosed solution is that an insert piece is mounted inside a central flow channel of flow control ball of a ball valve. Original properties of a basic ball valve can be modified by means of the inserted insert piece. The insert piece has a control portion provided with a flow aperture by means of which shape and dimensions of the central flow channel can be modified. The insert piece comprises also a support portion whereby the insert piece has an elongated configuration.

An advantage of the disclosed solution is that flow control properties of the ball valve can be modified in a simple manner when the disclosed insert piece is utilized. Installing the insert piece is quick and mounting of the insert piece requires no modifications to the basic ball valve structure. Further, the insert piece is inexpensive to manufacture.

An advantage of the longitudinal support portion is that it provides good fastening and may also direct the flow, if so desired.

According to the invention, the insert piece comprises a longitudinal support portion which may facilitate fastening of the insert piece. The support portion has tubular configuration. When the support portion is tubular, then the structure is rigid, and an inner opening of the tubular portion serves as a central flow passage. Further, by means of the tubular portion it is possible to influence to the flow passing through the valve ball. The tubular portion may direct the flow fluently through a valve ball having a hollow shell structure. Cross section of an inner opening of the tubular portion may be round, or it may alternatively be elliptical or may any other shape.

According to the invention, the insert piece has a sleeve-like configuration.

According to an example not forming part of the claimed invention, the support portion of the insert piece is not tubular but instead, the support portion comprises at least one axial rod or strip. However, number of the axial rods is preferably at least two, and may be 3 - 12, for example. Distal end portions of the rods are provided with fastening protrusions or corresponding mechanical fastening elements.

According to the invention, the insert piece is an elongated object having a first end and a second end. The flow control portion for controlling the flow passing through the valve ball is located at the first end of the insert piece. The insert piece has a designed operating direction relative to the flow passing though the ball valve. The flow control portion is intended to be located upstream and the opposite distal end of the support portion is then located downstream. However, in some cases the designed operating direction may be vice versa, i.e. the flow control portion may be located downstream. In other words, the first end of the insert piece provided with the flow control portion is typically designed for upstream mounting but in some special cases the mounting may be opposite.

According to an example not forming part of the claimed invention, the flow control portion of the insert piece is located between the first and second ends. Then, it can be considered that there are two tubular portions on both sides of flow control portion. The flow control portion may be located at a middle of the insert piece or it may be located at an offset from the middle point. The location of the flow control portion may be selected according to the need and valve application. When the flow control portion is located at the middle, or close to the middle, then the ball valve has symmetrical control properties and may be arranged to control passing fluid flows in both directions.

According to the invention, the flow control portion is a face section or element and is located at the first end of the insert piece. The face section may comprise transverse surfaces and is also provided with the flow aperture.

According to an embodiment, the flow control portion joints to the support portion in a streamlined manner. Then transition between these two portions does not cause turbulence or other undesired phenomenon to the fluid flow.

According to an embodiment, cross sectional area of the mentioned flow aperture of the face portion is smaller than cross sectional area of the central flow passage of the support portion.

According to an embodiment, the insert piece is a sleeve-like object having round or oval cross sections. Then inner shapes of the insert piece may similar at both ends, or alternatively the shapes may differ from each other, as well as cross sectional area.

According to an embodiment, the shape of the flow control portion is configured to change smoothly to basic inner shape of the support portion, which may be round or oval, for example. Then the flow control portion may have relatively long transition distance.

According to an embodiment, the shape of the central flow passage at the second end of the support portion is round; and the shape of the flow aperture of the flow control portion deviates from the round shape of the support portion.

According to an embodiment, the insert piece has a designed operating direction relative to the flow passing though the ball valve. The flow control portion is intended to be located upstream and the opposite end of the insert piece is located downstream. However, in some cases the insert piece may be arranged so that the flow control portion is located downstream.

According to an embodiment, the flow aperture of the flow control portion is configured to serve as a throttling element. Cross sectional area of the flow aperture may be minor than cross sectional area of the support portion.

According to an embodiment, the insert piece has a uniform structure wherein the flow control portion and the support portion are integrated into a single unity.

According to an embodiment, the insert piece is made plastic material or is manufactured of material having mainly plastic material.

According to an embodiment, the insert piece comprises at least one metallic or ceramic component which is supported to the basic plastic structure. Then it is possible that the flow control portion is made of metallic or ceramic material at least partly and is fastened to the plastic support portion. Alternatively, only the flow aperture is made of wear resistant material and such component is integrated to part of the insert piece.

According to an embodiment, the insert piece is manufactured by means of material additive manufacturing (AM), such as 3D printing or layering technology. This manufacturing technology is suitable for plastic and metallic materials. The AM technology allows manufacture of complex and accurate features.

According to an embodiment, the insert piece is manufactured by means of injection molding technique. This manufacturing technology is especially suitable for plastics.

According to an embodiment, the insert piece is manufactured by material removing manufacturing techniques, such as chip removing milling or machining.

According to an embodiment, the insert piece is made of composite material comprising reinforcing fibers and polymeric matrix material. Fiberglass and carbon fiber are examples of used reinforcing fibers and the matrix material may be of resin or plastic compound.

According to an embodiment, the insert piece may be made of metal material. The metallic insert piece may be manufactured by means of material additive manufacturing, for example. The insert piece may be made of entirely or partly of one or more metals.

According to the invention, the insert piece is provided with at least one locking element protruding from an outer surface of the insert piece and thereby allowing shape locking of the insert piece. The locking element is configured to prevent at least longitudinal movement of the insert piece. The locking element may be arranged to give way when the insert piece is pushed longitudinally inside the valve ball.

According to the invention, both ends of the insert piece are provided with at least one locking protrusion extending outwardly from the outer surface of the insert piece. Then the outer surface of the insert piece comprises a mounting surface between the mentioned locking protrusions located at opposite end portions of the insert piece.

According to the invention, the insert piece is provided with integrated structural locking elements. Then no separate mechanical locking elements or means are needed.

According to the invention, the first end of the insert piece comprises an annular locking protrusion on its outer surface.

According to the invention, the second end comprises several separate locking protrusions.

According to the invention, the insert piece comprises at least two longitudinal slits extending a distance from the second end towards the first end of the insert piece. The slits cut the uniform circumference of the insert piece and form thereby at least two inwardly bendable segments outer ends of which are provided with mechanical locking elements.

According to an embodiment, the shaft portion of the insert piece comprises several longitudinal slits extending a distance from the second end towards the first end of the insert piece. The mentioned slits define several narrow longitudinal parts, which may serve as plate springs. Distal ends of the longitudinal parts are provided with locking protrusions on their outer surface side. During the mounting of the insert piece the longitudinal parts or plate springs may yield and move radially inwards. When the insert piece is pushed axially forward and enters to its final mounting position, the longitudinal parts yield towards their original position and the locking protrusions set against mouth opening of a central flow opening of the flow control ball of the ball valve. In other words, the second end of the insert piece comprises several axial slits for facilitating the mounting of the insert piece.

According to an example not forming part of the claimed invention, an the insert piece may be fastened to the flow control ball of the ball valve by means of adhesive agent or using separate mechanical fastening elements. A further alternative may be that between the insert piece and the central flow passage of the flow control ball is an interference fit, also known as a press fit or friction fit, by means of which the insert piece is kept immovable relative to the flow control ball. A still further alternative may be that the insert piece is deformed after being mounted in place by means of a heated tool, for example. However, this embodiment does not form part of the claimed solution.

According to an example not forming part of the claimed invention, the insert piece may be fastened to the flow control ball of the ball valve by mechanical fastening means, such transverse pin or screw. However, this embodiment does not form part of the claimed solution.

According to an embodiment, the insert piece is premounted, or factory mounted to the flow control ball or valve ball.

According to an embodiment, the insert piece is retrofitted to the valve ball.

According to an embodiment, the insert piece is formed separately relative to the valve ball.

According to an embodiment, materials of the insert piece and the flow control ball are different.

According to an embodiment, the length of the insert piece is dimensioned to cover the entire length of the central flow channel of the flow control ball. Then the insert piece extends from one end of the central flow channel to and opposite other end as a uniform single piece.

According to an embodiment, the length of the insert piece is dimensioned to extend the central flow channel only partly. Thus, the length of the insert piece is shorter than the length of the central flow channel of the valve ball. This embodiment is suitable for solid valve balls.

According to an embodiment, the insert piece is releasably mounted, whereby the insert piece is easily mountable and dismountable. Structure of the insert piece may also allow retrofitting.

According to an embodiment, the insert piece is designed for tool-free mounting.

According to an embodiment, the mounting of the insert piece is accomplished simply by pushing the insert piece longitudinally inside the central flow channel.

According to an embodiment, the flow control ball has a shell configuration comprising spherical outer and inner surfaces and is provided with two openings on opposite sides of the shell structure partly defining the central flow channel. The insert piece may be mounted between the mentioned openings of the flow control ball and is thereby configured to limit the size of the central flow channel laterally. In other words, the insert piece may prevent the fluid flow to be in contact with the spherical inner surface and is instead configured to direct the fluid flow directly through the valve ball thereby decreasing turbulences and improving flowing characteristics.

According to an embodiment, the separate insert piece is designed to be mounted through a flow passage of the ball valve to a central flow channel of a flow control ball. Then the insert piece is mounted without dismounting the structure of the ball valve. In other words, the insert piece may be pushed inside the valve ball via an inlet or outlet of the ball valve. The basic structure of the ball valve may be already assembled when the insert piece is mounted. This embodiment provides flexibility to manufacture of the ball valves.

According to an embodiment, the insert piece is mounted through an inlet channel of a valve body of the ball valve.

According to an embodiment, the insert piece is mounted through an outlet channel of a valve body of the ball valve.

According to an embodiment, the insert piece may be utilized when a basic ball valve configuration is modified from a shutoff valve to a control valve. The solution comprises arranging the insert piece inside the flow control ball and by providing an inlet and outlet of the ball valve with sensing devices for sensing properties of the fluid flow. Further, the ball valve is provided with an actuator for turning the valve ball between a fully open and fully closed control position. Then basic ball valve structures may be manufactured and assembled beforehand in big manufacturing lots and decision of the final use application either as a shutoff valve or control valve needs to be done only at a later phase.

According to an embodiment, a pre-manufactured set of several insert pieces having different flow controlling properties may be produced for different ball valve types. Then the ball valve may be modified simply by electing a desired insert piece to be mounted inside the valve ball. Further, a ball valve manufacturer may design customized insert pieces for several end users.

According to an embodiment, a ball valve which is already in use may be modified by removing an existing insert piece from the flow control ball and substituting it with another insert piece inside the flow control ball in order to change flow controlling properties of the ball valve. This embodiment is beneficial for example when the control needs change or when the existing ball valve is reused in some other application.

The above disclosed embodiments may be combined in order to form suitable solutions having those of the above features that are needed.

### Brief description of the figures

Some embodiments are described in more detail in the accompanying drawings, in which
Figure 1 is a schematic side view of a ball valve and an insert piece,
Figure 2 is a schematic and sectional side view of a ball valve structure and an insert piece prior being assembled,
Figure 3 is a schematic and sectional side view of a ball valve in a situation when an insert piece is pushed inside an inlet opening but has not reached its final position,
Figure 4 is a schematic and sectional side view of a ball valve when an insert piece is pushed inside a central flow channel of a valve ball,
Figure 5 is a schematic view of a ball valve seen in a direction of flow,
Figures 6 - 9 are schematic views showing an insert piece in different view angles, and further, Figure 8 is a sectional presentation of the same,
Figures 10 - 13 are schematic views showing a valve ball which is provided with an insert piece, and further, Figure 7 is a sectional presentation of the same,
Figures 14 - 16 are schematic views showing valve balls provided with different types of insert pieces,
Figures 17 and 18 are schematic side views of some fastening principles of an insert piece,
Figures 19 - 21 are schematic views of some alternative shapes of a flow aperture of an insert piece,
Figure 22 is a schematic view of an insert piece having an alternative design in its support portion,
Figure 23 is a schematic view of a ball valve which is equipped for flow control applications,
Figure 24 is a schematic view of a ball valve which is equipped with a special handle, and
Figure 25 is a schematic diagram illustrating features relating to measures for modifying the basic ball valve to a shutoff and control valve.
For the sake of clarity, the figures show some embodiments of the disclosed solution in a simplified manner. In the figures, like reference numerals identify like elements. Figures 16, 17, 18 and 22 disclose examples which do not form part of the claimed invention.

### Detailed description of some embodiments

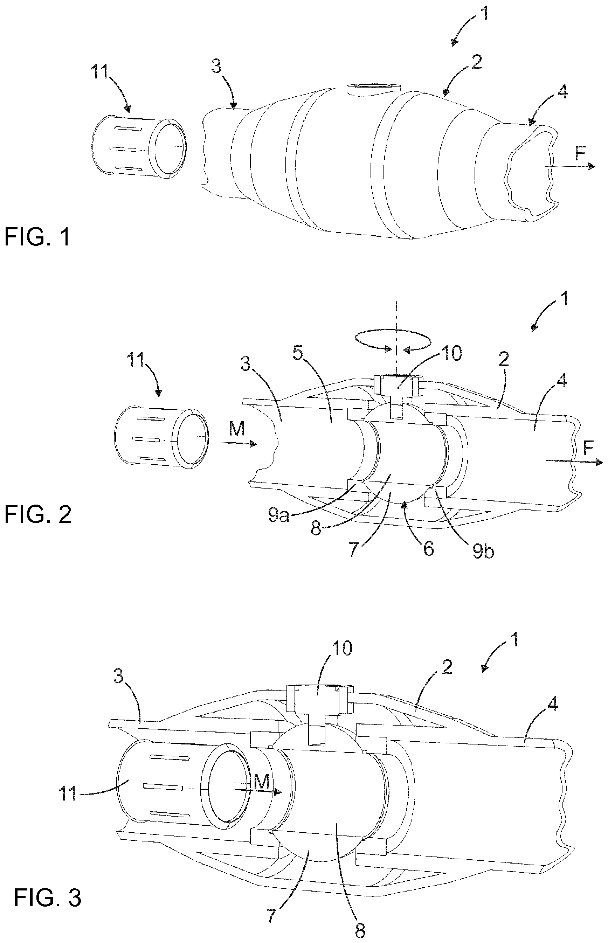

Figures 1 - 5 disclose a ball valve 1 comprising a valve body 2 provided with an inlet 3 and an outlet 4. The valve body 2 comprises a flow path 5 for directing fluid flow F through the ball valve. Inside the valve body 2 is a chamber 6 provided with a flow control ball 7 which is provided with a central flow channel 8 passing through the valve ball 7. The structure is also provided with seats and sealing elements 9a, 9b facing against spherical outer surface of the valve ball 7. The ball valve 1 further comprises at least one transverse shaft 10 connected to the valve ball 7. The shaft 10 is journaled to the valve body 2 so that turning force can be transmitted to valve ball 7 in order to change its rotational position.

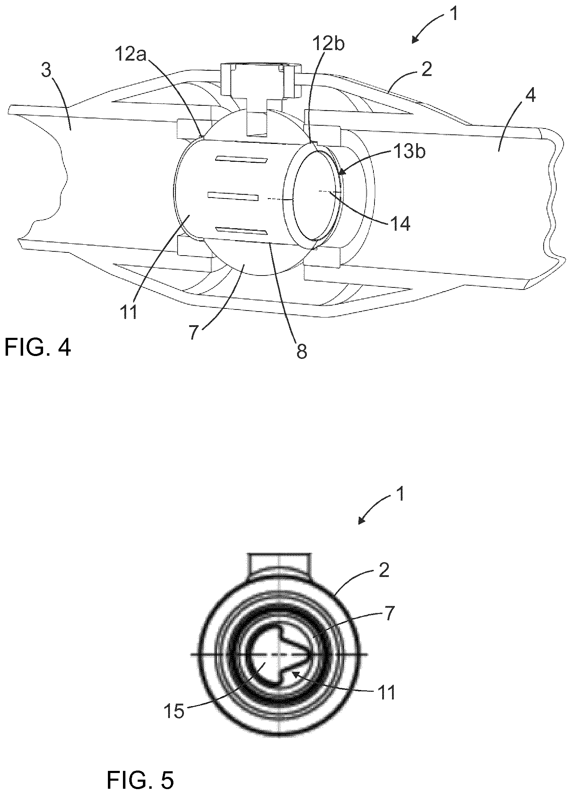

An insert piece 11 may be mounted inside the central flow channel 8 of the valve ball 7. The insert piece 11 may pushed longitudinally via the inlet 3 towards the valve ball as is indicated in Figure 3. Mounting direction M is shown in Figures 2 and 3. In Figure 4 the insert piece is reached its final mounting position inside the valve ball 7. Between the insert piece 11 and the valve ball 7 are mechanical locking means such as shape locking elements 12a, 12b which prevent the insert piece 11 from longitudinal movement. A second end 13b of the insert piece 11 may comprise several axial slits 14 or corresponding cuttings for facilitating mounting of the insert piece 11. Figure 5 discloses that the insert piece 11 comprises a flow aperture 15 having a desired shape and dimensions and is configured to affect properties of fluid flow passing through it.

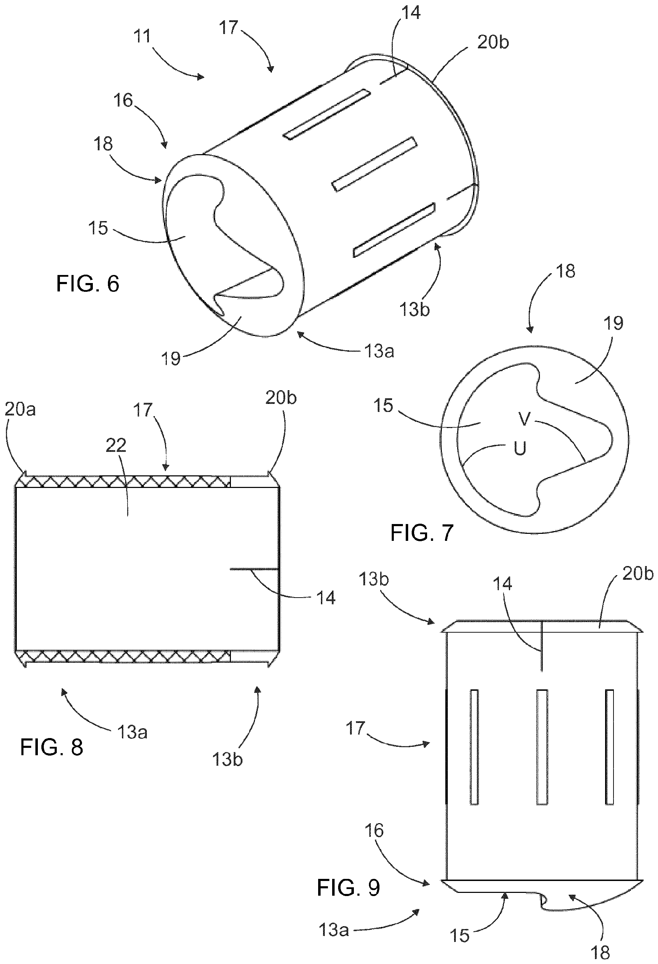

Figures 6 - 9 disclose an insert piece 11 which is an elongated object and comprises a control portion 16 and a support portion 17. The support portion 17 may have a tubular configuration. At a first end 13a of the insert piece may be a face portion 18 or face element which serves as the control portion 16. The face portion 18 comprises transverse surfaces 19 and the flow aperture 15. The transverse surfaces 19 may have spherical shape. At both ends 13a, 13b may be outwardly protruding fastening elements 20a, 20b providing the insert piece 11 with shape locking means. At the first end 13a may be a uniform flange 20a or rim and at the second end 13b may be two or more transverse protrusions 20b or segments. Between the mentioned protrusions 20b are slits 14 which allow the protrusions 20b to be bend inwardly during the mounting.

The shape of the flow aperture 15 may comprise a U-part or semicircle and a V-part or triangular. Further, the insert piece 11 comprises a central flow passage 22 which is in fluid connection with the flow aperture 15.

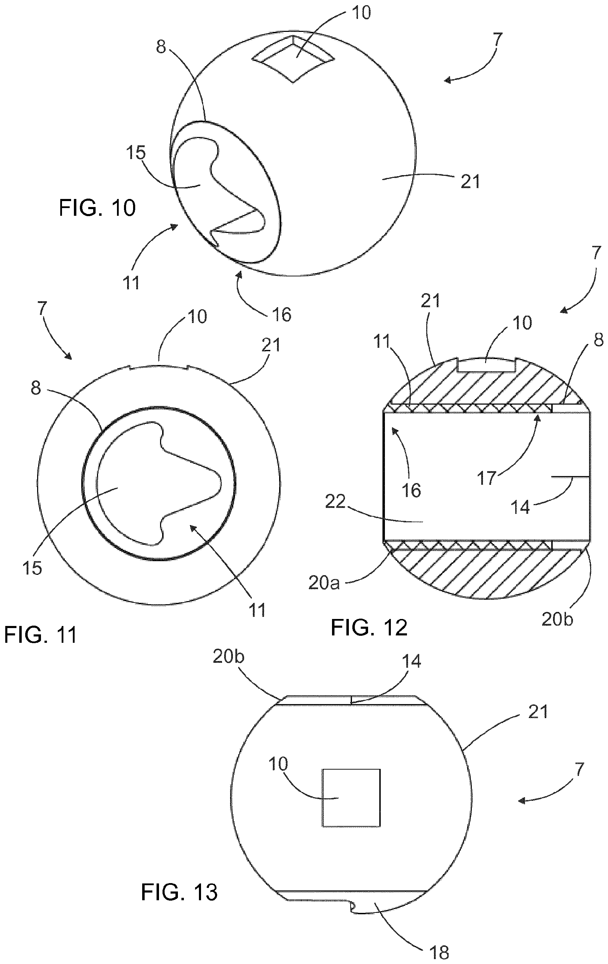

Figures 10 - 13 discloses a valve ball 7 provided with an insert piece 11. The valve ball 7 has a spherical outer surface 21 and a central flow channel 8. The valve ball 7 can be turned by directing turning force through a shaft 10 or corresponding force transmitting element or shape to the valve ball 7. Features of the valve ball 7 and the insert piece 11 have been discussed already above in this document.

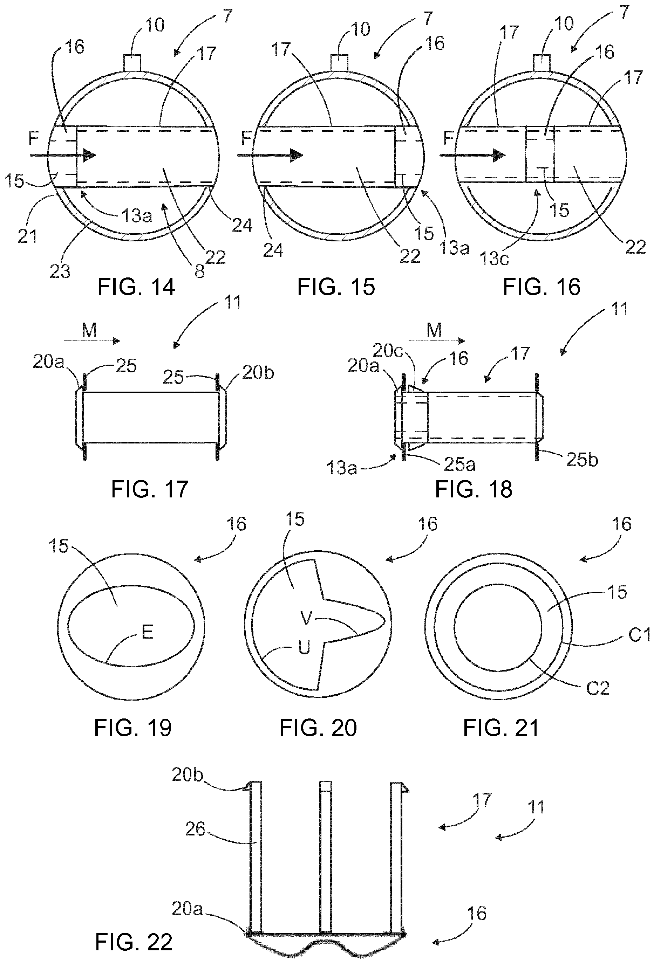

Figures 14 - 16 disclose valve balls 7 provided with different kind of insert pieces 11. In Figure 14 the insert piece 11 has a flow control portion 16 at its upstream side relative to the direction of flow F. In Figure 15 the flow control portion 16 is located downstream. In other words, position of the insert piece 11 is vice versa relative to the one shown in Figure 14. Further, in Figure 16 the flow control portion 16 of the insert piece 11 is located at a middle section 13c.

Figures 14 - 16 further show that the valve ball 7 may have a shell configuration comprising a spherical outer surface 21 and a spherical inner surface 23. The valve ball 7 is provided with openings 24 which define a central flow channel 8 through the valve ball 7. The openings 24 are configured to receive the insert piece 11, whereby the insert piece forms a flow element between the openings 24 and thereby limits the original inner space of the valve ball 7.

Figure 17 illustrates that the insert piece 11 may be locked between walls of the valve ball by means of protruding locking elements 20a and 20b located at opposite end portions of the insert piece 11. The locking elements 20a, 20b prevent longitudinal movement relative to the valve ball 7.

In Figure 18 the insert piece 11 comprises locking elements 20a and 20c only at the first end portion 13a. A wall 25a of the insert piece 11 is locked between the locking elements 20a and 20c.

Figures 19 - 21 disclose some possible shapes for flow apertures 15 of an insert piece 11. In Figure 19 the flow aperture 15 is elliptical E, in Figure 20 it comprises a U-section combined with a V-section, and in Figure 21 the aperture is a circular C1 and narrows towards the second end, which may also be circular C2.

Figure 22 discloses an alternative structure for an insert piece 11. A support portion 17 may comprise one or several axial rods 26 or strips. At least some of them are provided with locking elements 20b.

Figures 16, 17, 18 and 22 disclose some additional embodiments which do not form part of the claimed subject matter.

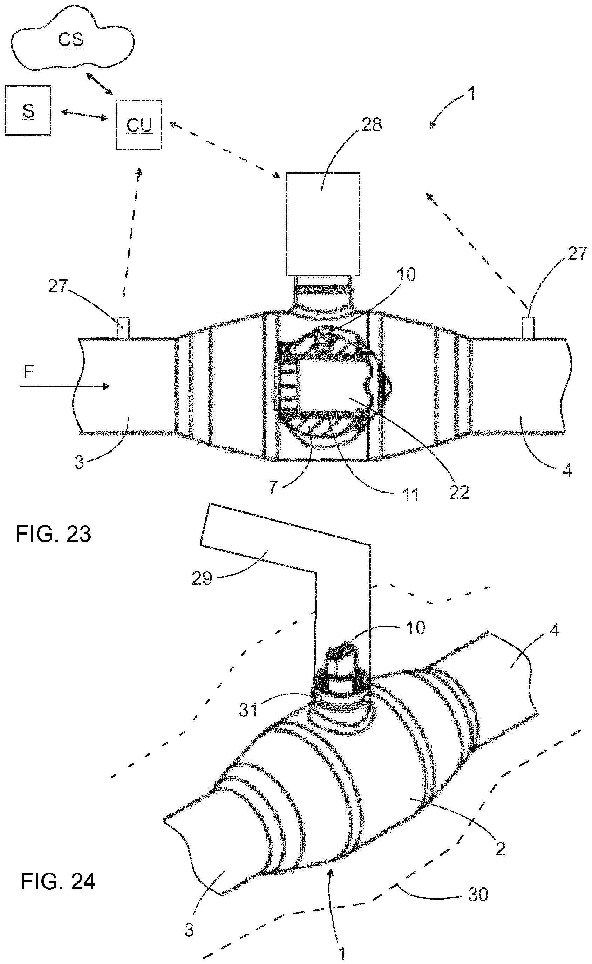

Figure 23 discloses a ball valve 1 intended for flow control applications. An inlet 3 and an outlet 4 of the ball valve are provided with sensing device 27 for detecting or measuring properties of the fluid flowing through the ball valve 1. The sensing devices 27 may be pressure sensors, flow meters, temperature sensors or any other measuring devices. Measuring data may be transmitted from the sensing devices 27 to one or more control units CU and control commands may be transmitted to an actuator 28 which is configured to control opening and closing of the valve ball 7. The control unit CU may communicate with one or more servers S and cloud services CS. Data transmission between the sensing devices and the control unit CU may be wired or wireless. The actuator 28 may be an electric motor, such as a servo motor which is capable to accurately turn a shaft 10 of the valve ball 7.

Figure 24 discloses a solution for which is provided with a manual handle 29 for actuating a valve ball. Figure 24 further discloses that around the ball valve may be an insulating cover 30, structure or arrangement.

Thereby the disclosed solution may also comprise the following features:

The ball valve 1 comprises a shaft 10 or trunnion extending from an outer surface of the valve body 2 to the flow control ball. An outer end of the trunnion 10 is connected to the handle 29 by means of which manual turning movement is transmitted via the trunnion to the flow control ball. Between the handle 29 and the trunnion is at least one sealing element 31. The handle 29 is removably connected to the trunnion 10 and may be released by pulling the handle 29 in longitudinal direction of the trunnion 10. The handle 29 has a tool free mounting and removal feature. Thus, the handle 29 is kept in place by means of friction locking wherein friction forces are generated by means of the one or more sealing elements 31. The sealing element 31 may be an O-ring, for example. The mentioned sealing elements 31 may have double purpose since they may also prevent leakage of fluid (liquid or gas flowing through the valve) in case a primary sealing between the trunnion 10 and the valve body 2 fails. Then the sealing 31 may prevent the fluid leaking inside an insulation structure 30 surrounding the ball valve 1. Structure of the handle 29 may be designed to cover sealing housing of the primary seal. Further, the handle 29 may be dimensioned to extend out of the insulation structure 30, whereby shaft portion of the handle 29 may be dimensioned in accordance with the insulation layer 30.

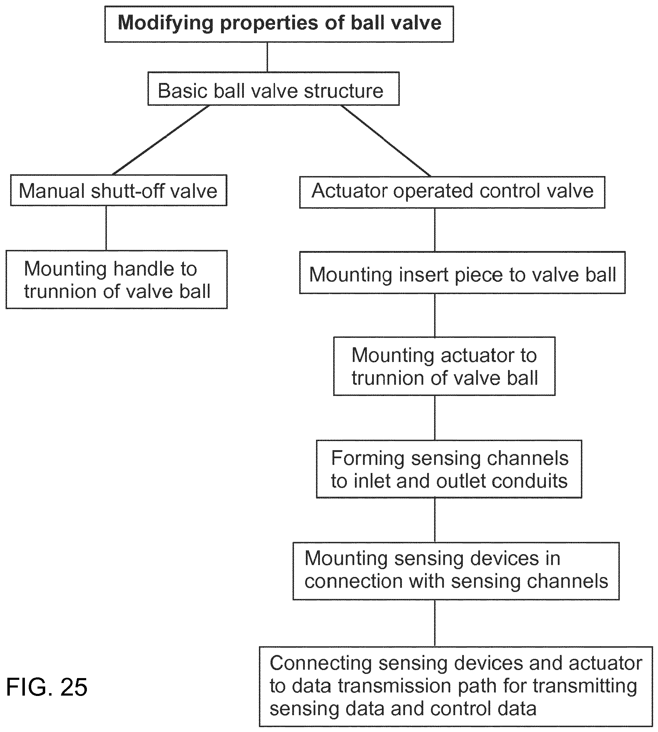

Figure 25 discloses features that have already been discussed above in this document.

The drawings and the related description are only intended to illustrate the idea of the invention. In its details, the invention may vary within the scope of the claims.

## Claims

1. An insert piece (11) for a flow control ball (7) of a ball valve (1) comprising:
an elongated support portion (17), which is provided with a central flow passage (22) and is supportable to a central flow channel (8) of the flow control ball (7);
a flow control portion (16) provided with a flow aperture (15);
and wherein the insert piece (11) is provided with integrated structural locking elements whereby it is without separate mechanical locking elements;
wherein the support portion (17) of the insert piece (11) comprises at least one tubular portion and the insert piece has a sleeve-like configuration;
the insert piece (11) has a first end (13a) and a second end (13b); and
the flow control portion is a face element (18) located at the first end (13a);
**characterized in that**
the structural locking elements are shape locking means in the form of outwardly protruding fastening elements (20a, 20b) provided at both ends (13a, 13b) of the insert piece (11);
at the first end (13a) is a uniform flange or rim (20a) and at the second end (13b) are two or more transverse protrusions or segments (20b); and
slits (14) are provided between the protrusions or segments (20b) to allow the protrusions or segments (20b) to be bend inwardly during the mounting of the insert piece in the control ball (7).

2. The insert piece as claimed in claim 1, **characterized in that**
the insert piece (11) is made at least predominantly of plastic material.

3. A flow control ball (7) of a ball valve (1) comprising:
a spherically shaped outer surface (21); and
a central flow channel (8) passing through the flow control ball (7);
**characterized in that**
the central flow channel (8) of the flow control ball (7) is provided with a separate sleeve-like insert piece (11) which is in accordance with claim 1 or 2;
and wherein the length of the insert piece (11) is dimensioned to cover the entire length of the central flow channel (8) of the flow control ball (7), whereby the insert piece (11) extends from one end of the central flow channel (8) to and opposite other end as a uniform single piece.

4. A ball valve (1) comprising:
a valve body (2) comprising an inlet (3) and outlet (4) and having a flow path (5) between the inlet (3) and outlet (4);
a flow control ball (7) having a central flow channel (8) through it and being rotatably mounted within the body (2) for opening and closing the flow path (5); and
at least one transverse shaft (10) connected to the flow control ball (7) and being journaled to the valve body (2), whereby the shaft (10) is configured to transmit turning force from a force member to the flow control ball (7);
**characterized in that**
the central flow channel (8) of the flow control ball (7) is provided with a separate sleeve-like insert piece (11), which is in accordance with claim 1 or 2;
and wherein the separate insert piece (11) is adapted to be mounted through the flow path (5) of the ball valve (1) and is mounted to the central flow channel (8) of the flow control ball (7), whereby the insert piece (11) is adapted to be mounted without dismounting the structure of the ball valve (1).

5. A method of modifying properties of a ball valve (1) and comprising:
mounting a separate insert piece (11) removably to a central flow channel (8) of a flow control ball (7) of the ball valve (1);
and mounting the insert piece (11) to the flow control ball (7) by means of integrated structural locking elements of the insert piece (11);
**characterized by**
using a sleeve-like insert piece (11), which is in accordance with claim 1 or 2, and
mounting the separate insert piece (11) through a flow passage (5) of the ball valve (1) to the central flow channel (8) of the flow control ball (7), whereby the insert piece (11) is mounted without dismounting the structure of the ball valve (1).

6. The method as claimed in claim 5, **characterized by**
using a basic ball valve configuration and modifying it from a shutoff valve to a control valve by arranging the insert piece (11) inside the flow control ball (7) and by providing an inlet (3) and outlet (4) of the ball valve (1) with sensing devices (27) for sensing properties of the fluid flow (F), and further by providing the ball valve (1) with an actuator (28) for turning the flow control ball (7) between a fully open and fully closed control position.

7. The method as claimed in claim 5 or 6, **c**haracterized by
removing an existing insert piece (11) from the flow control ball (7) and substituting it with another insert piece (11) inside the flow control ball (7) in order to change flow controlling properties of the ball valve (1).

## Patentansprüche

1. Einsatzteil (11) für eine Durchflusssteuerkugel (7) eines Kugelventils (1), umfassend:
einen länglichen Stützabschnitt (17), der mit einem zentralen Durchflusskanal (22) versehen ist und an einem zentralen Durchflusskanal (8) der Durchflusssteuerkugel (7) abstützbar ist;
einen Durchflusssteuerabschnitt (16), der mit einer Durchflussöffnung (15) versehen ist;
und wobei das Einsatzteil (11) mit integrierten strukturellen Verriegelungselementen versehen ist, wodurch es ohne separate mechanische Verriegelungselemente ist;
wobei der Stützabschnitt (17) des Einsatzteils (11) mindestens einen rohrförmigen Abschnitt umfasst und das Einsatzteil eine hülsenartige Konfiguration aufweist;
das Einsatzteil (11) ein erstes Ende (13a) und ein zweites Ende (13b) aufweist; und
der Durchflusssteuerabschnitt ein Flächenelement (18) ist, das am ersten Ende (13a) angeordnet ist;
**dadurch gekennzeichnet, dass**
die strukturellen Verriegelungselemente Formverriegelungsmittel in Form von nach außen vorstehenden Befestigungselementen (20a, 20b) sind, die an beiden Enden (13a, 13b) des Einsatzteils (11) vorgesehen sind;
an dem ersten Ende (13a) ein gleichmäßiger Flansch oder Rand (20a) ist und an dem zweiten Ende (13b) zwei oder mehr quer verlaufende Vorsprünge oder Segmente (20b) vorgesehen sind; und
Schlitze (14) zwischen den Vorsprüngen oder Segmenten (20b) vorgesehen sind, damit die Vorsprünge oder Segmente (20b) während des Anbringens des Einsatzteils in der Steuerkugel (7) nach innen gebogen werden können.

2. Einsatzteil nach Anspruch 1, **dadurch gekennzeichnet, dass**
das Einsatzteil (11) zumindest überwiegend aus Kunststoffmaterial hergestellt ist.

3. Durchflusssteuerkugel (7) eines Kugelventils (1), umfassend:
eine kugelförmige Außenoberfläche (21); und
einen zentralen Durchflusskanal (8), der durch die Durchflusssteuerkugel (7) verläuft;
**dadurch gekennzeichnet, dass**
der zentrale Durchflusskanal (8) der Durchflusssteuerkugel (7) mit einem separaten hülsenartigen Einsatzteil (11) nach Anspruch 1 oder 2 versehen ist,
und wobei die Länge des Einsatzteils (11) so bemessen ist, dass es die gesamte Länge des zentralen Durchflusskanals (8) der Durchflusssteuerkugel (7) abdeckt, wobei sich das Einsatzteil (11) von einem Ende des zentralen Durchflusskanals (8) zum und gegenüberliegenden anderen Ende als ein einheitliches Einzelstück erstreckt.

4. Kugelventil (1), umfassend:
einen Ventilkörper (2) mit einem Einlass (3) und einem Auslass (4) und mit einem Durchflussweg (5) zwischen dem Einlass (3) und dem Auslass (4);
eine Durchflusssteuerkugel (7), die einen zentralen Durchflusskanal (8) durch sie hindurch aufweist und drehbar innerhalb des Körpers (2) zum Öffnen und Schließen des Durchflussweges (5) angebracht ist; und
mindestens eine Querwelle (10), die mit der Durchflusssteuerkugel (7) verbunden und an dem Ventilkörper (2) gelagert ist, wobei die Welle (10) so konfiguriert ist, dass sie eine Drehkraft von einem Kraftelement auf die Durchflusssteuerkugel (7) überträgt;
**dadurch gekennzeichnet, dass**
der zentrale Durchflusskanal (8) der Durchflusssteuerkugel (7) mit einem separaten hülsenartigen Einsatzteil (11) nach Anspruch 1 oder 2 versehen ist,
und wobei das separate Einsatzteil (11) so ausgelegt ist, dass es durch den Durchflussweg (5) des Kugelventils (1) hindurch angebracht werden kann und an dem zentralen Durchflusskanal (8) der Durchflusssteuerkugel (7) angebracht ist, wodurch das Einsatzteil (11) so ausgelegt ist, dass es angebracht werden kann, ohne die Struktur des Kugelventils (1) zu demontieren.

5. Verfahren zum Modifizieren der Eigenschaften eines Kugelventils (1) und umfassend:
Anbringen eines separaten Einsatzteils (11), abnehmbar an einem zentralen Durchflusskanal (8) einer Durchflusssteuerkugel (7) des Kugelventils (1);
und Anbringen des Einsatzteils (11) an der Durchflusssteuerkugel (7) mittels integrierter struktureller Verriegelungselemente des Einsatzteils (11);
**gekennzeichnet durch**
die Verwendung eines hülsenartigen Einsatzteils (11) nach Anspruch 1 oder 2 und
Anbringen des separaten Einsatzteils (11) **durch** einen Durchflusskanal (5) des Kugelventils (1) hindurch an dem zentralen Durchflusskanal (8) der Durchflusssteuerkugel (7), wobei das Einsatzteil (11) angebracht wird, ohne die Struktur des Kugelventils (1) zu demontieren.

6. Verfahren nach Anspruch 5, **gekennzeichnet durch**
die Verwendung einer grundlegenden Kugelventilkonfiguration und deren Modifizierung von einem Absperrventil zu einem Steuerventil **durch** Anordnen des Einsatzteils (11) innerhalb der Durchflusssteuerkugel (7) und **durch** Versehen eines Einlasses (3) und eines Auslasses (4) des Kugelventils (1) mit Erfassungsvorrichtungen (27) zum Erfassen von Eigenschaften des Fluidstroms (F), und weiterhin **durch** Versehen des Kugelventils (1) mit einem Stellglied (28) zum Drehen der Durchflusssteuerkugel (7) zwischen einer vollständig offenen und einer vollständig geschlossenen Steuerposition.

7. Verfahren nach Anspruch 5 oder 6, **gekennzeichnet durch**
Entfernen eines vorhandenen Einsatzteils (11) aus der Durchflusssteuerkugel (7) und Ersetzen desselben **durch** ein anderes Einsatzteil (11) innerhalb der Durchflusssteuerkugel (7), um die Durchflusssteuereigenschaften des Kugelventils (1) zu ändern.

## Revendications

1. Pièce d'insertion (11) pour une bille de commande d'écoulement (7) d'un robinet à bille (1) comprenant :
une partie de support allongée (17), qui est munie d'un passage d'écoulement central (22) et peut être supportée par un canal d'écoulement central (8) de la bille de commande d'écoulement (7) ;
une partie de commande d'écoulement (16) munie d'une ouverture d'écoulement (15) ;
et dans laquelle la pièce d'insertion (11) est munie d'éléments de verrouillage structurels intégrés moyennant quoi elle est sans éléments de verrouillage mécaniques séparés ;
dans laquelle la partie de support (17) de la pièce d'insertion (11) comprend au moins une partie tubulaire et la pièce d'insertion a une configuration en forme de manchon ;
la pièce d'insertion (11) a une première extrémité (13a) et une deuxième extrémité (13b) ; et
la partie de commande d'écoulement est un élément de face (18) situé au niveau de la première extrémité (13a) ;
**caractérisée en ce que**
les éléments de verrouillage structurels sont des moyens de verrouillage de forme sous la forme d'éléments de fixation faisant saillie vers l'extérieur (20a, 20b) prévus au niveau des deux extrémités (13a, 13b) de la pièce d'insertion (11) ;
au niveau de la première extrémité (13a) se trouve une bride ou un rebord uniforme (20a) et au niveau de la deuxième extrémité (13b) se trouvent deux protubérances transversales ou segments transversaux (20b) ou plus ; et
des fentes (14) sont prévues entre les protubérances ou les segments (20b) pour permettre aux protubérances ou segments (20b) de se plier vers l'intérieur au cours du montage de la pièce d'insertion dans la bille de commande (7).

2. Pièce d'insertion telle que revendiquée dans la revendication 1, **caractérisée en ce que**
la pièce d'insertion (11) est réalisée au moins majoritairement en matière plastique.

3. Bille de commande d'écoulement (7) d'un robinet à bille (1) comprenant :
une surface extérieure de forme sphérique (21) ; et
un canal d'écoulement central (8) traversant la bille de commande d'écoulement (7) ;
**caractérisée en ce que**
le canal d'écoulement central (8) de la bille de commande d'écoulement (7) est muni d'une pièce d'insertion en forme de manchon séparée (11) qui est conforme à la revendication 1 ou 2 ;
et dans laquelle la longueur de la pièce d'insertion (11) est dimensionnée pour couvrir toute la longueur du canal d'écoulement central (8) de la bille de commande d'écoulement (7), moyennant quoi la pièce d'insertion (11) s'étend depuis une extrémité du canal d'écoulement central (8) vers et à l'opposé de l'autre extrémité comme une seule pièce uniforme.

4. Robinet à bille (1) comprenant :
un corps de robinet (2) comprenant une entrée (3) et une sortie (4) et ayant un trajet d'écoulement (5) entre l'entrée (3) et la sortie (4) ;
une bille de commande d'écoulement (7) traversée par un canal d'écoulement central (8) et montée en rotation à l'intérieur du corps (2) pour ouvrir et fermer le trajet d'écoulement (5) ; et
au moins un arbre transversal (10) relié à la bille de commande d'écoulement (7) et tourillonné sur le corps de robinet (2), moyennant quoi l'arbre (10) est configuré pour transmettre une force de rotation d'un élément de force à la bille de commande d'écoulement (7) ;
**caractérisé en ce que**
le canal d'écoulement central (8) de la bille de commande d'écoulement (7) est muni d'une pièce d'insertion en forme de manchon séparée (11), qui est conforme à la revendication 1 ou 2 ;
et dans lequel la pièce d'insertion séparée (11) est adaptée pour être montée à travers le trajet d'écoulement (5) du robinet à bille (1) et est montée sur le canal d'écoulement central (8) de la bille de commande d'écoulement (7), moyennant quoi la pièce d'insertion (11) est adaptée pour être montée sans démontage de la structure du robinet à bille (1).

5. Procédé de modification des propriétés d'un robinet à bille (1) et comprenant :
le montage d'une pièce d'insertion séparée (11) de manière amovible sur un canal d'écoulement central (8) d'une bille de commande d'écoulement (7) du robinet à bille (1) ;
et le montage de la pièce d'insertion (11) sur la bille de commande d'écoulement (7) au moyen d'éléments de verrouillage structurels intégrés de la pièce d'insertion (11) ;
**caractérisé par**
l'utilisation d'une pièce d'insertion en forme de manchon (11), qui est conforme à la revendication 1 ou 2,
et
le montage de la pièce d'insertion séparée (11) à travers un passage d'écoulement (5) du robinet à bille (1) sur le canal d'écoulement central (8) de la bille de commande d'écoulement (7), moyennant quoi la pièce d'insertion (11) est montée sans démontage de la structure du robinet à bille (1).

6. Procédé tel que revendiqué dans la revendication 5, **caractérisé par** l'utilisation d'une configuration de robinet à bille de base et sa modification d'un robinet d'arrêt à un robinet de commande en agençant la pièce d'insertion (11) à l'intérieur de la bille de commande d'écoulement (7) et en dotant une entrée (3) et une sortie (4) du robinet à bille (1) de dispositifs de détection (27) pour détecter les propriétés de l'écoulement de fluide (F), et en dotant en outre le robinet à bille (1) d'un actionneur (28) pour faire tourner la bille de commande d'écoulement (7) entre des positions de commande complètement ouverte et complètement fermée.

7. Procédé tel que revendiqué dans la revendication 5 ou 6, **caractérisé par**
le retrait d'une pièce d'insertion existante (11) de la bille de commande d'écoulement (7) et son remplacement par une autre pièce d'insertion (11) à l'intérieur de la bille de commande d'écoulement (7) afin de changer les propriétés de commande d'écoulement du robinet à bille (1).
